Europäisches Patentamt

European Patent Office

Office européen des brevets

(11) Publication number: 0 343 439
A2

# EUROPEAN PATENT APPLICATION

(21) Application number: 89108495.6

(51) Int. Cl.4: H04B 9/00 , H04L 11/16

(22) Date of filing: 11.05.89

(30) Priority: 13.05.88 CS 3242/88

(43) Date of publication of application:
29.11.89 Bulletin 89/48

(84) Designated Contracting States:
CH DE FR GB LI NL SE

(71) Applicant: Tesla, Koncernovy Podnik
No. 186 Podebradska
Praha 9(CS)

(72) Inventor: Tomes, Igor, Dipl.-Ing.
CSc, Pisecká 1
Praha 3(CS)
Inventor: Valenta, Vladimir, Dipl.-Ing.
Jeremenkova 76
Praha 4(CS)

(74) Representative: Patentanwälte Beetz sen. -
Beetz jun. Timpe - Siegfried -
Schmitt-Fumian- Mayr
Steinsdorfstrasse 10
D-8000 München 22(DE)

(54) Circuit arrangement of a communication network with at least one optical concentrator.

(57) Circuit arrangement of a communication network with at least one optical concentrator where each of said concentrators is provided with at least one optical branch of a communication station for connection of the communication station whereby a combination of optical transmitters (OTOB) and receivers (OROB) and change-over block (COOB), while utilizing a circular topology an optimum number of optoelectric connections with minimum length of connections can be achieved.

Fig. 3

# CIRCUIT ARRANGEMENT OF A COMMUNICATION NETWORK WITH AT LEAST ONE OPTICAL CONCENTRATOR

This invention relates to a circuit arrangement of a communication network with an optical concentrator and with any number of communication stations with two optoelectric connections in opposite directions.

It is common knowledge that passive and active topologies are applied in optical communication networks, whereby for active topologies the circular topology is very frequently used and for improvement of the reliability of the network doubled circuits or meanders in the same or opposite direction are used.

In case of a meander arrangement a connection of each nodal point with two adjacent and with at least one preceding nodal point, with an adjacent and at least one following nodal point is used in order to achieve a shunt connection whereby the expression "preceding" and "following" relates in these cases to the direction of transmission of a signal in the network. At networks with a doubled circular topology in opposite directions it is required according to a proposal of this kind to provide for each communication station an electronic repeating and branching nodal point. This nodal point secures the provision of a branch line in case the station is out of operation or in case of a loss of supply voltage. It provides furthermore a branchline for the signal in case of a breakdown of an adjacent nodal point or in case of an interruption of an optical line leaving or entering the nodal point. As main drawback of this doubled circuit arrangement can be considered the requirement to provide a branching and repeating nodal point for each communication station which has to comprise some control electronics concentrated in a control unit. The network does not secure a disconnection of a communication station in case of its failure or in case of a breakdown of the repeating and branching nodal point. It is furthermore required to connect by optoelectronic lines each station with the adjacent one.

It is an object of this invention to eliminate at least the major drawbacks of this above mentioned prior art and to provide a circuit arrangement of an optical communication network with at least one optical concentrator, whereby each of said optical concentrators comprises at least one optical branch of the station for connection of a communication station by way of optical waveguides. According to this invention a first output of an optical receiver of a main transmission direction is connected to a first input of a change-over block of the main transmission direction, the output of which is connected to the input of an optical branch of the communication station. The output of the optical branch of the communication station is connected both to the input of an optical transmitter of the main transmission direction and also to the second input of a change-over block of the branch transmission direction. The output from the change-over block of the branch direction is connected to the input of an optical transmitter of the branch transmission direction and to the second input of the change-over block of the main transmission direction. The output of an optical receiver of the branch transmission direction is connected to the first input of the change-over block of the branch direction, which receiver is by its monitor of the branch direction connected to a control input of a change-over block of the branch direction. The change-over block of the main direction is connected by its control input to a monitor of the main direction, which is simultaneously connected to a disconnection input of an optical transmitter of the branch transmission direction.

The input of the optical branch circuit of the communication station is connected to the input of an optical transmitter of the optical branch and to a second input of the change-over block of the optical branch. The output of the optical receiver of the optical branch which is by its monitor of the optical branch connected to the control input of the change-over block of the optical branch is connected to the first input of the change-over block of the optical branch. The output of the change-over block of the optical branch is connected with the output of the optical branch of the communication station.

As transmitter of the branch transmission direction of the main transmission direction in the optical concentrator and as transmitter in the optical branch station an electrical transmitter or a broadcast transmitter can be used.

As receiver of the branch transmission direction and as receiver of the main transmission direction in the optical concentrator and as receiver in the optical branch station an electrical receiver or a broadcast receiver can be used.

An advantage of the circuit arrangement of the communication network with at least one optical concentrator is primarily the possibility to create the possibility of optimum by-pass lines in case some communiciation station or the optical concentrator are for different reasons out of operation. The process of interconnection of main and branch directions of operation and the by-passing of communication stations can be realized in a simple way and is thus reliable. In addition the realization of a network with an optical concentrator reduces the number and length of optoelectric connections against the above mentioned proposal and thus reduces costs of networks. The circuit arrangement also enables to use optical and/or electrical, possibly also broadcast receivers and transmitters either of the same kind or in mutual combination.

A circuit arrangement of a communication network with at least one optical concentrator, where each concentrator comprises at least one optical branch communication station will be explained in detail in the following by the description of an exemplary embodiment shown in the attached drawings where

Fig. 1 shows an arrangement of an optical communication network with one optical concentrator and one optical branch communication station;

Fig. 2 a circuit arrangement of an optical concentrator;

Fig. 3 shows a circuit arrangement of an optical branch communication station;

Fig. 4 is an arrangement of an optical communication network with three optical concentrators, each of which comprises three optical branch communication stations with a connected communication station;

Fig. 5 shows an optical branch in case the communication station is out of operation;

Fig. 6 shows an optical network in case the concentrator is out of operation.

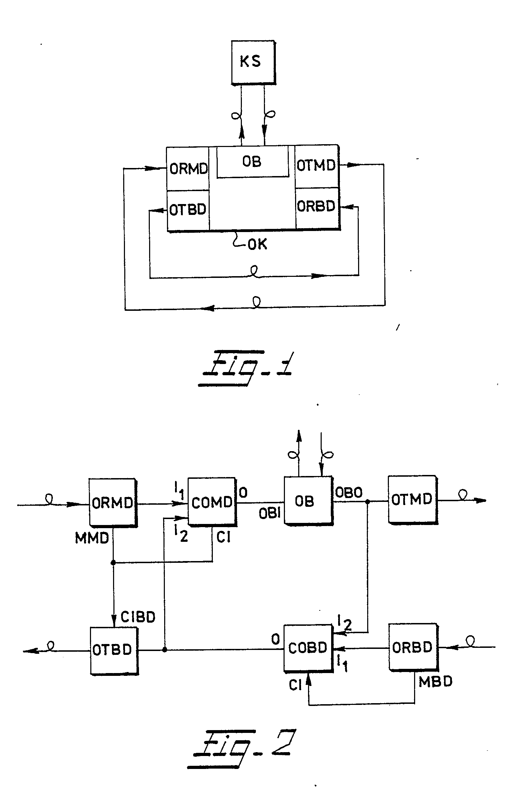

In the circuit arrangement of the communication network with at least one optical concentrator OK, at least one optical branch OB of the communication station and of at least one communication station KS as shown in Fig. 1, the communication station KS is connected to an optical branch OB of a communication station by means of optical waveguides. An optical transmitter OTMD of the main transmission direction of the optical concentrator OK is connected with an optical receiver ORMD of the main transmission direction of the optical concentrator OK by means of an optical waveguide and an optical transmitter OTBD of the branch transmission direction of the optical concentrator OK is connected with an optical receiver ORBD of the branch transmission direction of the optical concentrator OK by an optical waveguide.

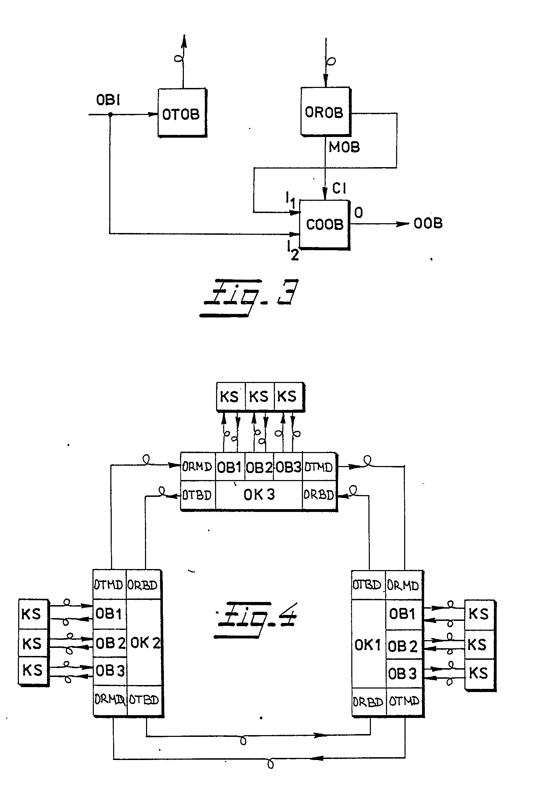

At an optical concentrator OK shown in Fig. 2, the output of the optical receiver ORMD of the main transmission direction is connected to the first input $I_1$ of a change-over block COMD of the main transmission direction for switching over informations from the main or branch direction of transmission to the output O of the change-over block COMD of the main transmission direction which is connected to the input OBI of the optical branch OB of the communication station for connection and disconnection of the communication station KS. The output OBO of the optical branch of the communication station is connected both to the input of the optical transmitter OTMD of the main transmission direction for transmission of informations in the main transmission direction and also to the second input $I_2$ of the change-over block COBD of the branch transmission direction for changing over the information from the output O of the change-over block COBD of the branch direction which itself is connected to the second input $I_2$ of the change-over block COMD of the main direction and to the input of the optical transmitter OTBD of the branch transmission direction. The output of the optical receiver ORBD of the branch transmission direction for supply of informations from the branch transmission direction is connected to the input $I_1$ of the change-over block COBD of the branch direction. A monitor MBD of the branch direction is connected to a control input CI of the change-over block COBD of the branch direction for switching over the main or branch transmission direction to the output O of the change-over block COBD of the branch direction. The change-over block COMD of the main direction is connected to the control input CI adapted for switching over the main or branch transmission direction to the output O of the change-over block, to the monitor MMD of the main transmission direction, which latter is simultaneously connected to the control input CIBD of the optical transmitter of the branch direction for intentionally bringing the optical transmitter OTBD of the branch direction out of operation.

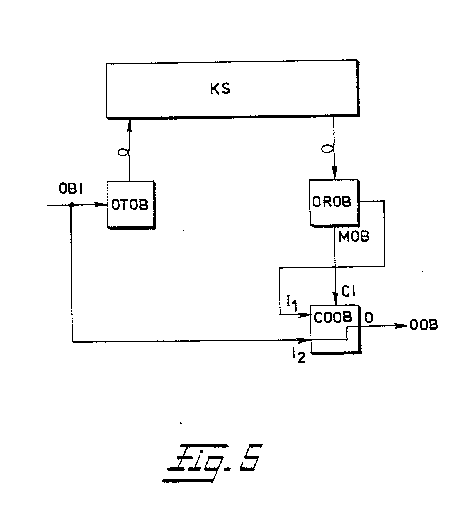

According to Fig. 3 the optical branch OB of the communication station comprises an input OBI of said branch connected to the input of the optical transmitter OTOB of the optical branch for transmission of signals of the communication station KS by an optical waveguide. To the second input $I_2$ of the change-over block COOB of the optical branch, the input of the optical transmitter OTOB is connected for transmission of informations in case the communication station KS is out of operation. To the first input $I_1$ of the change-over switch COOB of the optical branch the output of the optical receiver OROB of the optical branch is connected for transmission of informations from the communication station KS by an optical waveguide. The output of the optical branch OOB of the communication station is connected to the output O of the change-over block COOB of the branch station for transmission of informations from the first input $I_1$ or from the second input $I_2$ of the change-over block COOB of the optical branch controlled by the monitor MOB of the optical branch, connected to the control input CI of the change-over block COOB of the optical branch.

At a communication station with at least one optical concentrator OK and at least one optical branch OB of the communication station and at least one communication station KS is in the course of its operation according to Fig. 1 the information transmitted by the communication station KS is transmitted by an optical line to the optical receiver OROB of the communication station and furthermore by its optical transmitter OTMD to the optical receiver ORMD of the main transmission direction by way of an optical waveguide and is subsequently transmitted to the optical transmitter OTOB of the communiciation station, which transmitter transmits the information over an optical waveguide to the communication station KS.

With reference to Fig. 2 in the course of operation of the optical concentrator OK the information is supplied over the optical waveguide to the optical receiver ORMD of the main transmission direction. The information from the output of the optical receiver ORMD of the main transmission direction is supplied to the first input $I_1$ of the change-over block COMD of the main transmission direction which switches over the information from the main or branch direction of transmission in case of a correct function or of a disturbance of the main direction of transmission to the output O of the change-over block COMD of the main transmission direction which is connected to the output OOB of the optical branch of the communication station for connection or disconnection of the communication station KS in case of its correct operation or at condition out of operation. The information from the output OOB of the optical branch of the communication station is supplied both to the input of the optical transmitter OTMD of the main transmission direction for transmission of informations in the main direction of transmission and also to the second input $I_2$ of the change-over block COBD of the branch direction for switching over of the information from the main or branch direction of transmission in case of a correct functioning or in case of a disturbance of the branch transmission direction to the output O of the change-over block COBD of the branch direction, which is connected to the second input $I_2$ of the change-over block COMD of the main transmission direction and to the input of the optical transmitter OTBD of the branch direction of transmission. To the input $I_1$ of the change-over block COBD of the branch direction informations from the output of the optical receiver ORBD of the branch direction are supplied. A signal from the monitor MBD of the branch direction controls according to conditions of the branch direction of transmission the control input CI of the change-over block COBD of the branch direction for switching over the main or branch direction of transmission to the output O of the change-over block COBD of the branch direction. The change-over block COMD of the main direction is controlled by its own control input CI, to which a signal from the monitor MMD of the main direction is connected which in case of a disturbance of the main transmission direction switches over the branch direction of transmission to the output O of the change-over block COMD of the main direction. The signal from the monitor MMD of the main direction simultaneously controls the input of the optical transmitter OTBD of the branch direction and in case of a disturbance of the main transmission direction puts the optical transmitter OTBD of the branch direction out of operation.

In the optical branch OB of the communication station as shown in Fig. 3 the information is in the course of its operation supplied from the input OBI of the optical branch of the communication station to the input of the optical transmitter OTOB, which transmits informations to the communication station KS by an optical waveguide. To the second input $I_2$ of the changeover block COOB the information from the input of the optical transmitter OTOB of the optical branch is supplied. From the output of the optical receiver OROB of the optical branch the information from the communication station KS is supplied to the first input $I_1$ of the change-over block COOB of the optical branch. The signal of the monitor MOB of the optical branch supplied to the control input CI of the change-over block COOB switches over the information from the input $I_1$ or $I_2$ of the change-over block COOB of the optical branch in case of a correct operation or a condition out of operation of the connected communication station KS to the output O of the change-over block COOB, from which the information is transmitted to the output OOB of the optical branch of the communication station.

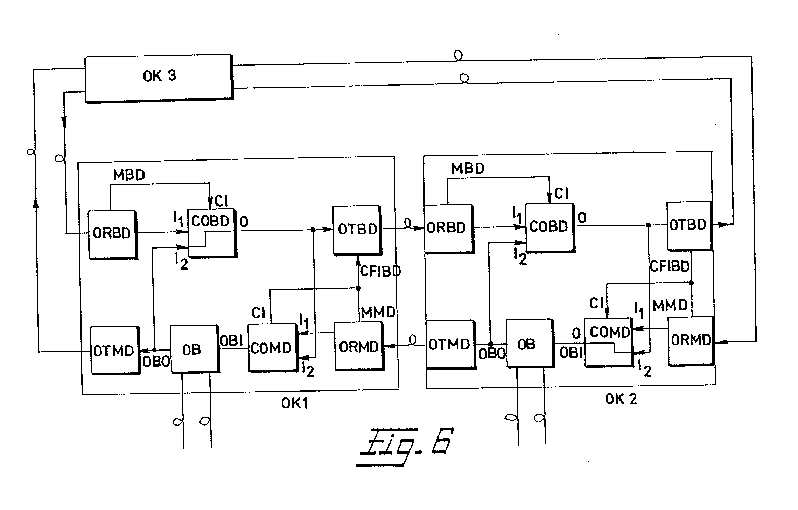

By means of optical branches OB1, OB2, OB3, OBn and of optical concentrators OK1, OK2, OK3, OKn it is possible to provide different interconnections of communication networks, for instance in case of a communication station with three optical concentrators OK1, OK2, OK3 where to each of them optical branches OB1, OB2, OB3 of communication stations are connected in series, with communication stations KS connected by optical waveguides to optical branches as shown in Fig. 4, where informations in case of operation of the communication network are transmitted between optical concentrators OK1, OK2, OK3 by two circles created by optical waveguides in opposite directions. The informations between optical branches OB of communication stations KS are supplied by optical waveguides in opposite directions. Informations between optical branches OB of communication stations are transmitted successively.

At an optical branch OB of a communication station in case a communication station KS is out of operation, which optical branch OB is connected by an optical waveguide, the information is according to Fig. 5 transmitted from the second input $I_2$ of the change-over block COOB of the optical branch to the output O.

In case of a communication network with three optical concentrators OK1, OK2, OK3 as shown in Fig. 6, where the third concentrator OK3 is supposed to be for some reason out of operation, in the change-over block COBD of the branch transmission direction in the first concentrator OK1, the signal of the monitor MBD of the branch direction connects the second input $I_2$ to the output O. In the second optical concentrator OK2 in the change-over block COMD of the main direction, the signal of the monitor MMD of the main direction connects the second input $I_2$ with the output O. The optical receiver ORMD of the main direction of transmission brings by a signal from the monitor MMD of the main direction by the cut-off input CFIBD of the optical transmitter of the branch direction of transmission the optical transmitter OTBD of the branch transmission direction out of operation.

As follows from the description of Figs. 1, 4, 5, 6 it is possible to determine in case of a certain number of optical branches OB at individual optical concentrators OK and a certain number of optical concentrators OK to create an optimum system of branch connections with an optimum number and minimum length of optoelectronic connections. By means of change-over blocks and a monitor MMD, MBD of the main and branch transmission direction it is from the point of view of operation possible to replace in the optical concentrator OK and in the optical branch OB of the communication station the optical transmitter or the optical receiver for an electrical transmitter or an electrical receiver, possibly also for a broadcast transmitter or receiver and thus create in the network different types of interconnections with transmitters and receivers of the same kind.

The circuit arrangement of a communication network with at least one optical concentrator with an optical branch of the communication station can be utilized in cases where is required to interconnect into a circular network communication stations in order to fulfill the requirement of a possibility of an easy transfer of a station without interruption of the communication in the circular network and where it is not required that all communication stations are simultaneous in operation.

## Claims

1. Circuit arrangement of a communication network with at least one optical concentrator where each of said concentrators is provided with at least one optical branch of a communication station for connection of the communication station by means of optical waveguides, **characterized** in that a first input of an optical receiver (ORMD) of the main transmission direction is connected to a first input ($I_1$) of a change-over block (COMD) of the main transmission direction, the output (O) of which is connected to the input (OBI) of the optical branch of the communication station, whereby the output (OOB) of the optical branch of the communication station is connected both to the input of an optical transmitter (OTMD) of the main transmission direction and also to a second input ($I_2$) of a change-over block (COBD) of the branch transmission direction, the output (O) of which is connected to the input of an optical transmitter (OTBD of the branch transmission direction and to a second input ($I_2$) of a change-over block (COMD) of the main transmission direction, whereby to the first input ($I_1$) of the change-over block (COBD) of the branch transmission direction the output of an optical receiver (ORBD) of the branch transmission direction is connected, which is connected by its monitor (MBD) of the branch transmission direction to a control input (CI) of the change-over block (COBD) of the branch transmission direction, while the change-over block (COMD) of the main transmission direction is connected by its control input (CI) to the monitor (MMD) of the main transmission direction, which is simultaneously connected to a cut-off input of the optical transmitter (OTBD) of the branch transmission direction.

2. Circuit arrangement according to claim 1, **characterized** in that each of said optical concentrators is provided with at least one optical branch of a communication station, wherein the input (OBI) of the optical branch of the communication station is connected to the input of the optical transmitter (OTOB) of the optical branch and to a second input ($I_2$) of a change-over block (COOB) of the optical branch, to the first input ($I_1$) of which the output of an optical receiver (OROB) of the optical branch is connected, which is by its monitor (MOB) of the optical branch connected to a control input (CI) of the change-over block (COOB) the output (O) of which is connected to the output (OOB) of the optical branch of the communication station.

3. Circuit arrangement according to claim 1 or 2, **characterized** in that transmitters (OTBD) of the branch transmission direction, transmitters (OTMD) of the main transmission direction in the concentrator (OK) and transmitters in a branch of a communication station are electrical or broadcast tramsmitters.

4. Circuit arrangement according to one of the claims 1, 2 or 3,
**characterized** in that
receivers (ORBD) of the branch transmission direction, receivers (ORMD) of the main transmission direction and receivers of a branch of a communication station are electrical or broadcast receivers.

Fig.1

Fig.2

_Fig. 3_

_Fig. 4_

KS

OBI

OTOB

OROB

MOB

$I_1$    CI

COOB  0 → OOB

$I_2$

Fig. 5

EP 0 343 439 A2

_Fig. 6_